# EUROPEAN PATENT APPLICATION

(11) **EP 3 401 795 A1**
(43) Date of publication of application: **14.11.2018**
(21) Application number: 17169862.4
(22) Date of filing: 08.05.2017
(51) Int. Cl.: G06F 17/27, G06Q 10/06

(54) **CLASSIFYING CONVERSATIONAL SERVICES**

(71) Applicant: Nokia Technologies Oy, 02610 Espoo (FI)
(72) Inventor: Theeten, Bart Antoon Rika, 2018 Antwerpen (BE); Huysegems, Rafaël, 2018 Antwerpen (BE); Janssens, Nico Nj, 2018 Antwerpen (BE)
(74) Representative: IP HILLS NV

(57) **Abstract**

According to an embodiment, the disclosure relates to an application (300) comprising an utterance analyser with a communication link to a library, the library comprising a database with a set of service categories, each service category referring to one or more conversational services all capable of handling one or more intents (313); and the utterances analyser configured to receive a natural language utterance (310) and to derive therefrom one or more intents (313) and further arranged to list for each intent a set of conversational services by communication with the library.

## Description

### Technical Field

The present invention generally relates to the field of conversational services. More particularly, the present invention relates to the classifying of conversational services.

### Background

Web services are services offered by electronic devices to other devices over the Internet. In order to make use of such services, these devices establish a machine-to-machine communication for transferring machine readable file formats, such as for example XML and JSON.

A specific category of web services are conversational services. A user of these services expresses a request in spoken or written natural language and expects that the conversational service can successfully process this request.

The Uber conversational service for booking a taxi ride is an example of such a service. A user may express a request in the form of "I need a taxi from my office to Brussels Airport". Next, the Uber conversational service processes this request by booking a ride from the user's office to the airport.

Such a request is provided in the form of a natural language utterance, which, on its turn, comprises one or more intents.

Several applications are developed wherein conversational services are implemented and to which a user can express a natural language utterance. Examples of such applications are Siri, developed by Apple Inc., and Amazon Alexa, developed by Amazon Lab126. A difference between both applications is that Siri only works on devices running on an operating system of Apple Inc. itself, while Amazon Alexa may run on devices having a Unix-like operating system such as Android.

### Summary

These applications however are closed systems, regardless on which operating system they run. Therefore, if a third party wants to integrate a new service, dedicated development kits need to be used. Another implication is that a request can only be initiated by the application itself and that only services related to the application are consulted. This approach results in further drawbacks. First, a provider of the application can favour its own services over those of third parties. Second, due to this given preference it is uncertain whether the best service is offered for a given request. Third, due to the closed system it is even possible that no service is offered at all while being available.

It is an objective of the present disclosure to alleviate these problems and to provide a solution that offers conversational services in response to a request in an optimal manner and independently of the service provider.

This object is achieved, according to a first aspect, by a conversational services library comprising:
- a database comprising a set of service categories; and wherein each service category refers to one or more conversational services; and wherein conversational services referred to by a service category are all capable of handling one or more intents; and
- an interface arranged for selecting conversational services from the database based on an intent.

Thus, each service category is characterized on its ability to process or handle one or more specific intents. In other words, conversational services grouped in a service category have similar features since they can process intents in a same way. A conversational service may further be referred to by more than one service category depending on its features. The interface is arranged to receive an intent and based on this intent it selects a specific service category with conversational services that are capable of handling the intent. In this way, a group of conversational services are provided which all can handle a specific intent.

Different advantages are identified as a result of this approach. First, the library is not bounded to a specific operating system. Therefore, any conversational service may be added to the database of the library. This is done by merely referring to the conversational service so no dedicated development kit is needed. Furthermore, a whole range of conversational services may be offered which all perform a same type of service instead of only offering one. This approach discourages that one service would be favoured over another one. Finally, all available services are offered as a response to a specific intent, leaving room for further selection by other parties, e.g., third party applications.

According to an embodiment, the conversational services library further comprises a registering module arranged to receive a new service category through the interface to add the new service category to the database.

An intent may not always be linked to a service category. In this case, the registering module adds a new service category by registering it in the database. Another possibility is that a new category is registered in order to anticipate to new types of services. Advantageously, the chance that a service is not offered at all is reduced to a minimum.

According to a second aspect, the disclosure relates to an utterance analyser for interpreting natural language utterance comprising:
- a collecting module arranged to receive a natural language utterance; and
- a processing module arranged to derive from the natural language utterance one or more intents; and
- the conversational services library according to the first aspect wherein the interface is further arranged to receive the one or more intents and to provide for each intent a set of conversational services; and
- a listing module arranged to list for each intent the set of conversational services.

Preferably, the library is used by an utterance analyser that can interpret natural language utterance. The collecting module receives these utterances and derives one or more intents out of it. The processing module uses, for example, a programmed utterance parser or a natural language engine to make such a derivation. The intents are received by the interface of the library and provides for each intent a set of conversational services. Finally, the conversational services related to an intent are listed by the listing module. Advantageously, an overview of conversational services is obtained which are capable of handling the intents which are expressed in the utterance.

Instead of incorporating the conversational services library in the utterance analyser the two may also be linked to each other. This is achieved by an interface of the analyser which is managed to communicate with the library. The communication is run over a computer network, such as for example a wired or a wireless network. An advantage is that resources needed for the library are provided on a dedicated remote location and don't need to be incorporated in the utterance analyser itself.

According to an embodiment, the utterance analyser further comprises an analysing module configured to analyse the received natural language utterances and/or the listed set of conversational services and to derive therefrom a success rate indicative for a relevance of the listed set relative to the received utterances.

The analysing module uses natural language processing techniques like, for example, sentiment analysis. The analysis is performed on the natural language utterances combined with the set of conversational services provided as a response to these utterances. Through this analysis, the analysing module may derive if a conversational service was successfully offered or not. Another possibility is that no services are offered at all, which is also detected by the analysing module. Thus, based on this sentiment analysis, a success rate is given to one or more conversational services in the set which indicative for the relevance of the listed set relative to the received utterances. In this way, a future listing of a set of conversational services may take this success rate into account to list the set in a more efficient way.

Besides implicitly detecting by the analysing module if a set was successfully offered, the utterance analyser may further comprise a feedback module configured to receive feedback from a user on a conversational module. A user himself may thus explicitly indicate if the offered set of conversational services is relevant. As a result, the effectiveness of the offered set of conversational services is captured in an even more accurate way.

The utterance analyser may further comprise a monitoring module configured to monitor follow-steps of a user. These follow-steps are indicative for a type of one or more initiated processes after the listing of the set. These processes are for example the selection and subsequently execution of a conversational service of the set. These initiated processes may thus also indicate the effectiveness of one of the offered services.

Based on the success rate, the feedback, the follow-up steps or any combination of the parameters, the utterance analyser may rank conversational services in a service category. This is performed using a ranking module. In this way, the best service for a specific intent for a user may be given by ranking it on top.

According to a third aspect, the disclosure relates to a natural language processing application comprising the utterance analyser according to the second aspect.

According to a fourth aspect, the disclosure relates to a method for selecting conversational services, the method comprising the steps of:
- receiving an intent; and
- consulting a library comprising a set of service categories wherein each service category refers to one or more conversational services and wherein conversational services referred to by a service category are all capable of handling one or more intents; and
- selecting conversational services based on an intent.

According to a fifth aspect, the disclosure relates to a computer program product comprising a computer-executable instructions for performing the method according to the fourth aspect when the program is run on a computer.

According to a sixth aspect, the disclosure relates to a computer readable storage medium comprising the computer program product according to the fifth aspect.

According to a seventh aspect, the disclosure relates to a data processing system programmed for carrying out the method according to the fourth aspect.

### Brief Description of the Drawings

Fig. 1 illustrates a conversational services library according to an embodiment of the invention; and
Fig. 2 illustrates an utterance analyser according to an embodiment of the invention; and
Fig. 3 illustrates an application comprising an utterance analyser according to an embodiment of the invention; and
Fig. 4 illustrates a suitable computing system for performing steps according to various embodiments of the invention.

### Detailed Description of Embodiment(s)

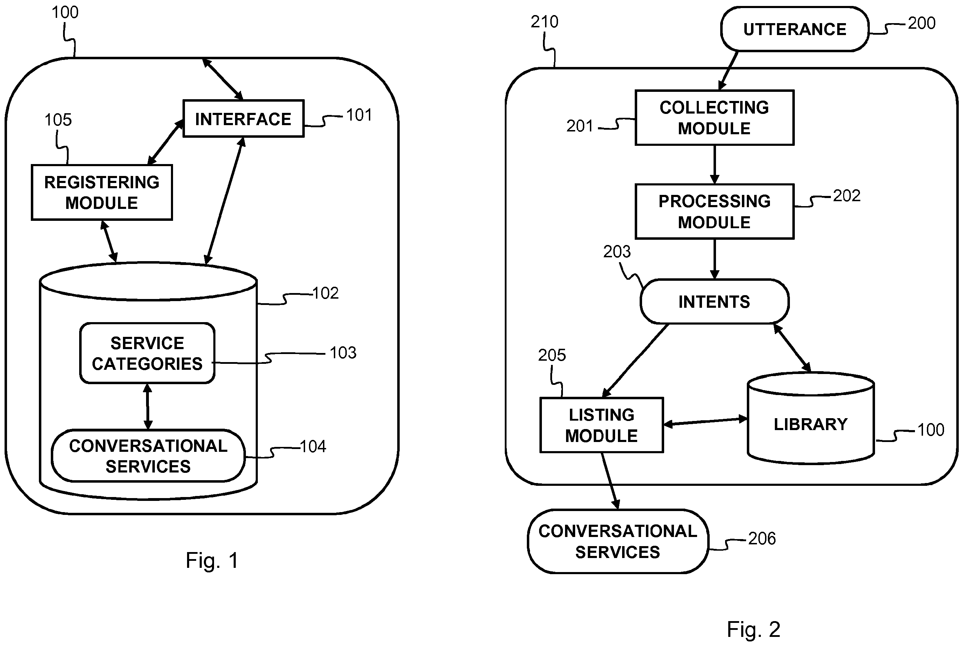

Fig. 1 illustrates a conversational services library and Fig. 2 illustrates an utterance analyser according to embodiments of the invention. The library 100 comprises a database 102 which on its behalf comprises a set of service categories 103. Each service category 103 refers to one or more conversational services 104. Each conversational service category 104 referred to by a service category 103 are all capable of handling one or more intents 203. The conversational services 104 are thus grouped in a service category 103 having similar features and can process intents 203 in a same way.

The utterance analyser 210 is configured to receive a natural language utterance 200 through the collecting module 201. A natural language utterance 200 is for example "I need a taxi". This utterance 200, collected by the collecting module 201 is transferred to the processing module 202. The processing module 202 is arranged to derive from the natural language utterance 200 one or more intents 203. With this exemplary utterance 200, i.e. "I need a taxi", the derived intent 203 is thus for example "book_taxi". The corresponding service category 103 is then "taxi" and the related conversational services 104 in the database 102 are "uber", "lyft.com" and any other conversational service that can handle intents 203 related to taxi rides.

The intents 203 may be derived from the natural language utterances 200 by the use of a programmed utterance parser or a natural language utterance engine. Optionally also entities of each utterance are derived by the programmed utterance parser or natural language utterance engine in the processing module 202. The intents 203 are derived by applying well established text classification and slot filing algorithms to the given utterances 200.

After the intent "book_taxi" is derived by the processing module 202, it is sent to the library 100 through its interface 101. Next, the database 102 is consulted and the service category "taxi" is selected since this is the service category that can handle the intent "book_taxi". Next, the related conversational services "uber" and "lyft.com" to this service category "taxi" are sent to the listing module 205 of the utterance analyser 210. In the final step the selected conversational services 206 are listed. As a result, a list of conversational services 206 based on the natural language utterance 200 is obtained. According to an embodiment of the invention, the listing may also comprise references to the conversational services 206.

It is also possible that no service category in the database 102 is related to an intent. In other words, an utterance 200 forwarded to the utterance analyser 210 does not result in a listing of conversational services 206. In this occurrence, a new service category may be registered by the registering module 105 of the library 100. Preferably, when a new service category is registered, the category is accompanied with a number of utterances to train the library 100. These training utterances are provided by a service developer of a conversational service who shares part of his test utterances or provides sample conversations. Alternatively, sample conversations could also be obtained by mining interactions or dialogs that already took place between users and this conversational service.

Besides the registering of a new service category, the registering module 105 may also register conversational services 104 related to an existing service category. One way to register a conversational service is by the use of, for example, a dedicated application programming interface. In this way, the conversational service is registered manually. Another way to automatically register a conversational service is by monitoring interactions between users and the conversational service. This latter way of automatically registering conversational services can be considered as the conversational counterpart of web crawling.

A new conversational service may be registered by the registering module 105 of the library 100 based on natural language utterances 200 received by the utterance analyser 210. First, the processing module 202 derives intents 203, or optionally entities, from these utterances 200. Next, the processing module then identifies if there already exist intents, or optionally entities, that are currently registered in the database 102 of the library 100, for these utterances. Subsequently, the processing module 202 retrieves from the database 102 through the interface 101 all references to these conversational services that are currently registered in the service category which relates to the derived intents, or optionally entities. Then, the processing module 202 verifies if all these conversational services are capable of handling the utterances associated to the new conversational service. One way to verify this is by sending utterances of the new conversational service to all conversational services referred by the selected service category. Optionally, this selected service category may operate in a sandbox for this purpose. Then, the responses of these conversational services are analysed using established natural language processing techniques like, for example, sentiment analysis to identify if the services were able to process the utterances.

First, if all the conversational services registered in the selected service category can correctly handle the utterances of the new conversational service, then the registering module 105 of the library 100 registers the new conversational service to this category.

Second, if a majority of conversational services cannot understand the utterances of the new conversational service, then the registering module 105 of the library 100 creates a new service category for this conversational service and updates and/or re-trains the processing module 202. This approach is similar to the registration of a new service category by the registering module 105.

Third, when only a minority of the conversational services cannot handle the utterances of the new conversational service, then the processing module 202 may decide to register the new conversational service in the referred service category anyway.

According to an embodiment, a re-classification of conversational services as in the second and third scenario, service categories may also be identified by the use of labels or tags. In this way, the labels or tags attached to every registered conversational service represent the category where to conversational services belong to. Updating a classification may thus be performed by changing labels or tags.

If no intents or entities are found for the utterances 200, this implies that the language model of the programmed utterance parser or natural language utterance engine needs to be extended first. The processing module 202 then adds a new intent to the language model of the programmed utterance parser or natural language utterance engine and re-trains the updated model using these utterances. Once the model is updated and re-trained, the processing module 202 is able to correctly classify said utterances. Next, the registering module 105 registers a new service category and instructs the processing module 202 to associate this new category with recently added intents and optionally also entities. As a result, when the processing module 202 receives utterances from the collecting module 201 that result into these new created intents, or optionally entities, it can immediately access the associated service category in the library 100 including all conversational services that have been registered into this service category so far. After this completion, the registering module 105 adds the new conversational service to this new service category.

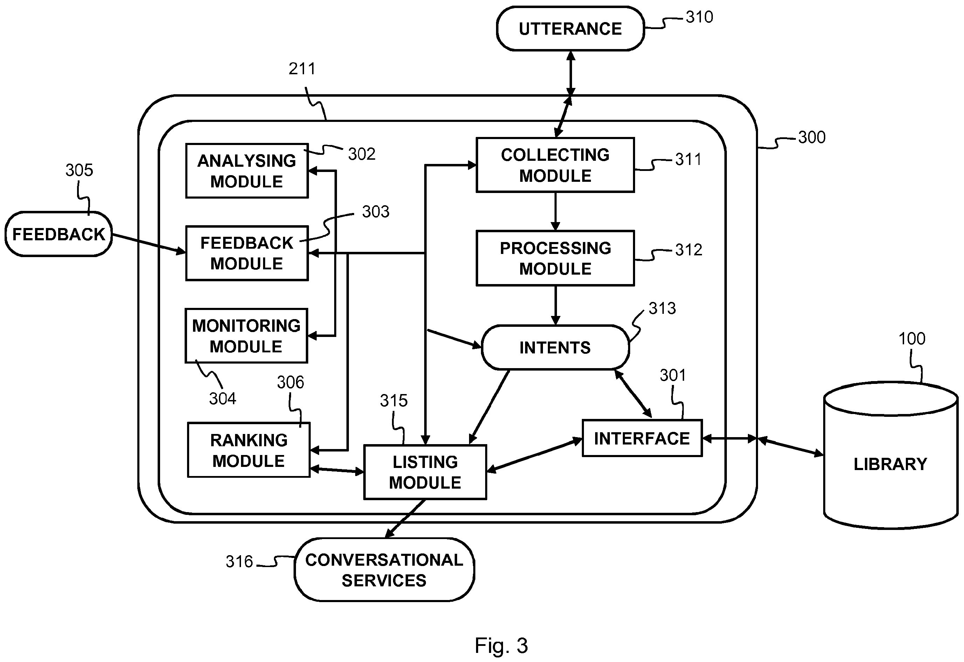

According to an aspect of the invention, the utterance analyser may be integrated in an application. Fig. 3 illustrates such an application 300 comprising the utterance analyser 211. In contrast to the utterance analyser 210 wherein the library 100 is integrated, the utterance analyser 211 has an interface 301 in order to communicate with the library 100. The application 300 may, for example, run on a smartphone and the communication with the library 100 may run over a computer network such as cloud computing. The collecting module 311 where utterances 310 are received may, for example, be integrated in a chat-system. utter. A user of the application 300 may then start a conversation with the utterance analyser 211.

In order to analyse if a conversation was successful, the utterance analyser 211 running in the application 300 further comprises an analysing module 302, a feedback module 303 and a monitoring module 304.

The analysing module 302 is configured to analyse both utterances 310 received by the collecting module 311, in for example the chat system, and conversational services 316 listed by the listing module 315. In other words, the analysing module 302 analyses a conversation of the user of the application 300 and the listed conversational services 316 resulting from this conversation.

In order to deduce if a conversation was successful, the analysing module 302 can make use of well-established natural language processing techniques like, for example, sentiment analysis. Using this technique, a success rate is derived which is indicative for the relevance of the listed conversational services 316 in relation to the utterances 310.

Another way of determining if a conversation is successful is by explicitly soliciting for user feedback 305 after a conversation is ended. This feedback may be requested by the feedback module 303. Thus, a user indicates if a conversation was successful. This may, for example, be indicated by liking or not liking a list through thumbs up or thumbs down.

A third way of determining if a conversation is successful is by the use of the monitoring module 304. The monitoring module 304 monitors the follow-up steps taken by the user of the application. If a user starts using a conversation service of the list 316, this may indicate that this service is relevant to the utterances 310. Another follow-up step is for example a termination of the application 300 without the execution of any of the listed conversational services. This may indicate that the listing was unsuccessful. The follow-up steps are thus indicative of the type of initiated processed after the listing of the conversational services 316.

The analysing module 302, the feedback module 303 and/or the monitoring module 304 may instruct a ranking module 306 to rank the conversational services 316. The ranking may thus be based on either parameters resulting from the implicit analysis by the analysing module 302, the feedback, the follow-up steps or any combination of these parameters. In this way, the ranking is adjusted to the user of the application.

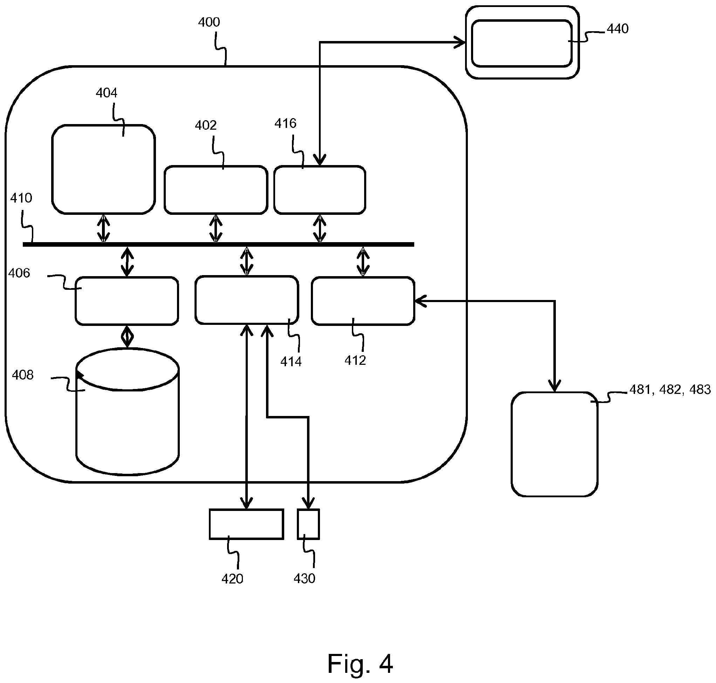

Figure 4 shows a suitable computing system 400 for performing the steps according to the above embodiments. Computing system 400 may be used as an application 300 comprising an utterance analyser. Computing system 400 may in general be formed as a suitable general purpose computer and comprise a bus 410, a processor 402, a local memory 404, one or more optional input interfaces 414, one or more optional output interfaces 416, a communication interface 412, a storage element interface 406 and one or more storage elements 408. Bus 410 may comprise one or more conductors that permit communication among the components of the computing system 400. Processor 402 may include any type of conventional processor or microprocessor that interprets and executes programming instructions. Local memory 404 may include a random access memory (RAM) or another type of dynamic storage device that stores information and instructions for execution by processor 402 and/or a read only memory (ROM) or another type of static storage device that stores static information and instructions for use by processor 402. Input interface 414 may comprise one or more conventional mechanisms that permit an operator to input information to the computing device 400, such as a keyboard 420, a mouse 430, a pen, voice recognition and/or biometric mechanisms, etc. Output interface 416 may comprise one or more conventional mechanisms that output information to the operator, such as a display 440, etc. Communication interface 412 may comprise any transceiver-like mechanism such as for example one or more Ethernet interfaces that enables computing system 400 to communicate with other devices and/or systems to acquire the parameters at regular intervals. The communication interface 412 of computing system 400 may be connected to such another computing system by means of a local area network (LAN) or a wide area network (WAN) such as for example the internet. Storage element interface 406 may comprise a storage interface such as for example a Serial Advanced Technology Attachment (SATA) interface or a Small Computer System Interface (SCSI) for connecting bus 410 to one or more storage elements 408, such as one or more local disks, for example SATA disk drives, and control the reading and writing of data to and/or from these storage elements 408. Although the storage elements 408 above is described as a local disk, in general any other suitable computer-readable media such as a removable magnetic disk, optical storage media such as a CD or DVD, -ROM disk, solid state drives, flash memory cards, ... could be used. The system 400 described above can also run as a virtual machine above the physical hardware.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A conversational services library comprising:
- a database comprising a set of service categories; and wherein each service category refers to one or more conversational services; and wherein conversational services referred to by a service category are all capable of handling one or more intents; and
- an interface arranged for selecting conversational services from the database based on an intent.

2. Conversational services library according to claim 1, further comprising a registering module arranged to receive a new service category through the interface to add the new service category to the database.

3. An utterance analyser for interpreting natural language utterances comprising:
- a collecting module arranged to receive a natural language utterance; and
- a processing module arranged to derive from the natural language utterance one or more intents; and
- the conversational services library according to claim 1 wherein the interface is further arranged to receive the one or more intents and to provide for each intent a set of conversational services; and
- a listing module arranged to list for each intent the set of conversational services.

4. An utterance analyser for interpreting natural language utterances comprising:
- a collecting module arranged to receive a natural language utterance; and
- a processing module arranged to derive from the natural language utterance one or more intents; and
- an interface managed to communicate with the library according to claim 1 over a computer network; and
- a listing module arranged to list for each intent a set of conversational services by communication with the library.

5. Utterance analyser according to claim 3 or 4 wherein the processing module comprises a programmed utterance parser to derive from the natural language utterance the one or more intents.

6. Utterance analyser according to claim 3 or 4 further comprising an analysing module configured to analyse the received natural language utterances and/or the listed set of conversational services and to derive therefrom a success rate indicative for a relevance of the listed set relative to the received utterances.

7. Utterance analyser according to claim 6, further comprising a feedback module configured to receive feedback from a user on a conversational service.

8. Utterance analyser according to claim 7, further comprising a monitoring module configured to monitor follow-up steps of a user indicative for a type of one or more initiated processes after the listing of the set.

9. Utterance analyser according to claim 8, further comprising a ranking module arranged to rank conversational services in a service category based on the success rate and/or feedback and/or the follow-up steps.

10. A natural language processing application comprising the utterance analyser according to claim 9.

11. A method for selecting conversational services, the method comprising the steps of:
- receiving an intent; and
- consulting a library comprising a set of service categories wherein each service category refers to one or more conversational services and wherein conversational services referred to by a service category are all capable of handling one or more intents; and
- selecting conversational services based on an intent.

12. A computer program comprising a computer-executable instructions for performing the method according to claim 11 when the program is run on a computer.

13. A computer readable storage medium comprising the computer program product according to claim 12.

14. A data processing system programmed for carrying out the method according to claim 11.
